# EUROPEAN PATENT APPLICATION

(11) **EP 4 763 409 A1**
(43) Date of publication of application: **24.06.2026**
(21) Application number: 25830895.6
(22) Date of filing: 25.02.2025
(51) Int. Cl.: B23K 31/12, B23K 37/00, G06N 20/00

(54) **WELDING MANAGEMENT DEVICE, WELDING MANAGEMENT METHOD, AND WELDING MANAGEMENT SYSTEM**

(30) Priority: 19.06.2024 KR 20240079446
(71) Applicant: LG Energy Solution, Ltd., Seoul 07335 (KR)
(72) Inventor: YANG, Ho Jin, Daejeon 34122 (KR); OH, Jong Kyun, Daejeon 34122 (KR); KWON, Hyeon Seo, Daejeon 34122 (KR)
(74) Representative: Plasseraud IP
(86) International application number: PCT/KR2025/002626
(87) International publication number: WO 2025/263734

(57) **Abstract**

According to some embodiments, a voltage conversion device includes an interface configured to acquire electrical data collected during a welding process for a battery cell, and a controller configured to derive a state score representing a welding state of the battery cell from the electrical data based on a state diagnosis model, determine whether a data shift of a first distribution of state scores for target battery cells occurs by comparing the first distribution and a second distribution of state scores of training data used to train the state diagnosis model, and adjust the state diagnosis model based on a difference between the first distribution and the second distribution when the data shift occurs.

## Description

### TECHNICAL FIELD

### Cross-reference to Related Applications

This application claims priority from Korean Patent Application No. 10-2024-0079446, filed on June 19, 2024, the disclosures of which are incorporated by reference herein.

### Technical Field

Embodiments disclosed in this document relate to a welding management device, welding management method and welding management system.

### BACKGROUND ART

Recently, research and development on secondary batteries have been actively conducted. Here, secondary batteries are batteries that can be charged and discharged, and may be interpreted as including both conventional Ni/Cd batteries, Ni/MH batteries, and recent lithium-ion batteries. Among secondary batteries, lithium ion batteries may have higher energy density than conventional Ni/Cd batteries, Ni/MH batteries, etc. and may be manufactured to be small and lightweight, and thus may have high usability as a power source for mobile devices. Recently, the scope of use of the secondary batteries has expanded to include a power source for electric vehicles, and the secondary batteries are attracting attention as a next-generation energy storage medium.

A welding process may be performed to manufacture a battery cell. For example, electric resistance welding may be performed to form a positive electrode tab of a cylindrical type battery cell. During the welding process, electrical data such as voltage, current, temperature, and resistance of the welding device may be collected, and a welding state of the battery cell may be determined based on the electrical data. On the other hand, if a state of the welding device changes, the electrical data used to determine the welding state may also change, which may reduce the accuracy of diagnosing the welding state.

### DISCLOSURE OF THE INVENTION

### TECHNICAL PROBLEM

Embodiments disclosed in this document provide a welding management device, welding management method, and welding management system capable of solving the problem that the accuracy of diagnosing a welding state based on electrical data is reduced due to changes in a state of a welding device.

The technical problems of the embodiments disclosed in this document are not limited to the technical problems mentioned above, and other technical problems that are not mentioned may be clearly understood by those skilled in the art from the descriptions below.

### TECHNICAL SOLUTION

According to some embodiments, a welding management device includes an interface configured to acquire electrical data collected during a welding process for a battery cell, and a controller configured to derive a state score representing a welding state of the battery cell from the electrical data based on a state diagnosis model, determine whether a data shift of a first distribution of state scores for target battery cells occurs by comparing the first distribution and a second distribution of state scores of training data used to train the state diagnosis model, and adjust the state diagnosis model based on a difference between the first distribution and the second distribution when the data shift occurs.

According to some embodiments, the controller may be configured to determine whether the data shift occurs based on a statistical hypothesis test for the first distribution and the second distribution.

According to some embodiments, the controller may be configured to determine that the data shift occurs when a significance probability (p-value) representing a probability that a null hypothesis that assumes that a first mean value of the first distribution and a second mean value of the second distribution are equal to each other is established is less than or equal to a threshold value.

According to some embodiments, the controller may be configured to adjust a threshold score used to determine a welding state of the battery cell as defective when the data shift occurs.

According to some embodiments, the controller may be configured to adjust the threshold score based on a difference between a first representative score among the state scores for the target battery cells and a second representative score among the state scores of the training data.

According to some embodiments, the target battery cells may include a reference number or more of battery cells produced most recently among a plurality of battery cells mass-produced by the welding process.

According to some embodiments, the data shift may occur due to replacement of consumables of a welding device that performs the welding process.

According to some embodiments, a welding management method includes acquiring electrical data collected during a welding process for a battery cell, deriving a state score representing a welding state of the battery cell from the electrical data based on a state diagnosis model, determining whether a data shift of a first distribution of state scores for target battery cells occurs by comparing the first distribution and a second distribution of state scores of training data used to train the state diagnosis model, and adjusting the state diagnosis model based on a difference between the first distribution and the second distribution when the data shift occurs.

According to some embodiments, the determining of whether the data shift occurs may include determining whether the data shift occurs based on a statistical hypothesis test for the first distribution and the second distribution.

According to some embodiments, the determining of whether the data shift occurs may include determining that the data shift occurs when a significance probability (p-value) representing a probability that a null hypothesis that assumes that a first mean value of the first distribution and a second mean value of the second distribution are equal to each other is established is less than or equal to a threshold value.

According to some embodiments, the adjusting of the state diagnosis model may include adjusting a threshold score used to determine a welding state of the battery cell as defective when the data shift occurs.

According to some embodiments, the adjusting of the state diagnosis model may include adjusting the threshold score based on a difference between a first representative score among the state scores for the target battery cells and a second representative score among the state scores of the training data.

According to some embodiments, the target battery cells may include a reference number or more of battery cells produced most recently among a plurality of battery cells mass-produced by the welding process.

According to some embodiments, the data shift may occur due to replacement of consumables of a welding device that performs the welding process.

According to some embodiments, a welding management system includes a welding device configured to perform a welding process on a battery cell and a welding management configured to acquire electrical data collected during a welding process, derive a state score representing a welding state of the battery cell from the electrical data based on a state diagnosis model, determine whether a data shift of a first distribution of state scores for target battery cells occurs by comparing the first distribution and a second distribution of state scores of training data used to train the state diagnosis model, and adjust the state diagnosis model based on a difference between the first distribution and the second distribution when the data shift occurs.

### ADVANTAGEOUS EFFECTS

According to the embodiments disclosed in this document, a welding management device, welding management method, and welding management system capable of solving the problem that the accuracy of diagnosing a welding state based on electrical data is reduced due to changes in a state of a welding device can be provided.

The technical effects according to the embodiments disclosed in this document are not limited to the effects mentioned above, and other effects not mentioned will be clearly understood by those skilled in the art according to the disclosure of this document.

### BRIEF DESCRIPTION OF THE DRAWINGS

FIG. 1 illustrates how a welding management system operates according to some embodiments.
FIG. 2 illustrates components constituting a welding management device according to some embodiments.
FIG. 3 illustrates a process of adjusting a threshold score of a state diagnosis model in response to a data shift according to some embodiments.
FIG. 4 illustrates state scores calculated before and after a data shift occurs according to some embodiments.
FIGS. 5 and 6 illustrate a form in which over-detection occurs in which normal data is incorrectly determined as defective due to a data shift according to some embodiments.
FIG. 7 illustrates steps constituting a welding management method according to some embodiments.

### MODE FOR CARRYING OUT THE INVENTION

Hereinafter, embodiments described in this document are described with reference to the accompanying drawings. However, this is not intended to limit the disclosure of this document to a specific embodiment, but should be understood to include various modifications, equivalents, and/or alternatives of the embodiments described in this document.

Embodiments of this document and the terms used therein are not intended to limit the technical features described in this document to a specific embodiment, but should be understood to include various modifications, equivalents, or alternatives of the embodiment. In connection with the description of the drawings, similar reference numerals may be used for similar or related components. The singular form of a noun corresponding to an item may include a single or a plurality of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component can be connected to the other component directly (e.g., in a wired manner or wirelessly), or indirectly (e.g., through a third component).

The method according to the various embodiments disclosed in this document may be provided by being included in a computer program product. The computer program product may be traded between a seller and a buyer as a product. The computer program product may be distributed in the form of a machine-readable recording medium (e.g., compact disc read only memory (CD-ROM)), or distributed through an application store (e.g., Play Store^{™}), distributed directly between two user devices (e.g., smartphones), or distributed online (e.g., downloaded or uploaded). In the case of online distribution, at least a part of the computer program product may be temporarily stored or temporarily generated in a machine-readable recording medium, such as a memory of a manufacturer's server, an application store's server, or an intermediary server.

According to embodiments disclosed in this document, each of the components (e.g., modules or programs) described above may include a single or plurality of entities, and some of the plurality of entities may be separated and placed in other components. According to embodiments disclosed in this document, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

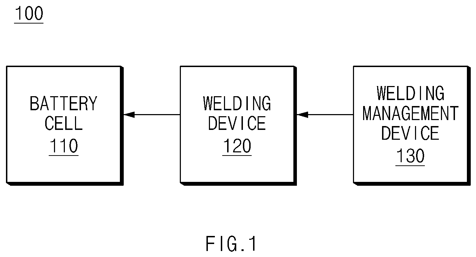

FIG. 1 illustrates how a welding management system operates according to some embodiments.

Referring to FIG. 1, a welding management system 100 may include a welding device 120 that performs a welding process for a battery cell 110 and a welding management device 130 that manages the welding process. However, the present invention is not limited thereto, and some configurations may be omitted from the welding management system 100, or other general-purpose configurations may be further included in the welding management system 100.

The battery cell 110 may be formed by the welding process. For example, the battery cell 110 may include a cylindrical type battery cell. The cylindrical type battery cell may include rivets, collectors, tabs, beading, etc. formed on the positive electrode or negative electrode, and the detailed structure of such a cylindrical type battery cell may be formed by welding.

The welding device 120 may perform a welding process to form the battery cell 110. The welding process may include a resistance welding process. During the resistance welding process, a voltage and a current may be input to the welding device 120, and the welding device 120 may output a voltage and a current to a welding target, and a temperature, resistance, etc. of the welding target may be measured. The quality of the welding process for the battery cell 110 may be determined based on whether electrical data as described above during the welding process is out of an appropriate range. Focusing on this, a model that estimates a welding state based on the electrical data may be utilized.

The welding management device 130 may manage the welding process for the battery cell 110 performed by the welding device 120. The welding management device 130 may diagnose the welding state of the battery cell 110 using a state diagnosis model. For example, the welding management device 130 may determine whether the state diagnosis model for diagnosing the welding state is operating normally or whether correction of the state diagnosis model is necessary.

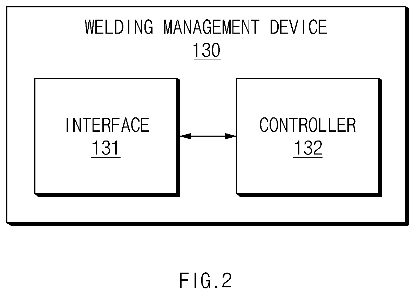

FIG. 2 illustrates components that constitute a welding management device according to some embodiments.

Referring to FIG. 2, the welding management device 130 may include an interface 131 and a controller 132. However, the present invention is not limited thereto, and some components may be omitted from the welding management device 130, or other general-purpose components may be further included in the welding management device 130.

The interface 131 may be configured to acquire electrical data collected during the welding process for the battery cell 110. For example, the interface 131 may include a sensor configured to measure electrical data, and the sensor may include a voltage sensor, a current sensor, a temperature sensor, a resistance sensor, etc. Alternatively, a sensor configured to measure electrical data may be provided outside the welding management device 130, and the interface 131 may include a communication unit configured to receive electrical data from the outside in wired manner and/or wirelessly.

The controller 132 may include a memory and a processor. The processor of the controller 132 may be implemented with an array of a plurality of logic gates or a general-purpose microprocessor for processing various operations, and may be configured with a single processor or a plurality of processors. For example, the processor may be implemented in the form of at least one of a microprocessor, a CPU, a GPU, and an AP.

The memory of the controller 132 may store various data, instructions, mobile applications, computer programs, etc. The processor may process various computations by executing instructions stored in the memory. For example, the memory may be implemented as a nonvolatile device such as ROM, PROM, EPROM, EEPROM, flash memory, PRAM, MRAM, RRAM, FRAM, etc., or a volatile device such as DRAM, SRAM, SDRAM, PRAM, etc., and may be implemented in the form of an HDD, SSD, SD, Micro-SD, etc., or in the form of a combination thereof.

The controller 132 may be configured to derive a state score representing the welding state of the battery cell 110 from the electrical data based on the state diagnosis model. For example, the state diagnosis model may derive a state score representing the welding state of the battery cell 110 using an isolation forest (IF) algorithm of a binary tree partitioning method. The IF algorithm may be configured to derive the state score based on a path distance from a root node. According to the embodiment, a threshold score may be set to distinguish between normal welding and defective welding, and any battery cell having a state score exceeding the threshold score may be determined as a welding defect. According to the embodiment, the state diagnosis model may derive a state score representing the welding state of the battery cell 110 using a local outlier factor (LOF) algorithm. The LOF algorithm may derive the state score by providing an indicator representing the degree to which it corresponds to an outlier by utilizing local information of the electrical data.

The controller 132 may be configured to determine whether a data shift of a first distribution of state scores for target battery cells occurs by comparing the first distribution with a second distribution of state scores of training data used to train the state diagnosis model. The target battery cells may include a first number or more of cells, and the first number may be, for example, 10, 20, 25, 30, 50, 100, 150, 200, 300, 500, or any other appropriate number. The target battery cells may be set by the welding management device 130 or by a user of the welding management device 130. For example, the user may set the target battery cells when the accuracy of the state diagnosis model is suspected to be degraded. Alternatively, when diagnosis performance of the welding state is degraded to be less than or equal to a certain level, the welding management device 130 may set cells before and after that point in time as target battery cells. The training data used to train the state diagnosis model may be continuously updated as the welding management device 130 is operated. When determining the second distribution, the current training data may be used. According to the embodiment, the distribution of state scores may be determined by statistical variables such as the mean, median, and standard deviation. In this case, when the difference between the statistical variables in the first distribution and the second distribution exceeds a threshold value, it may be determined that a data shift occurs. The threshold value may be set and changed according to the performance requirements of the state diagnosis model. For example, when a difference between the mean of the first distribution and the mean of the second distribution exceeds the threshold value, it may be determined that a data shift occurs.

The controller 132 may be configured to adjust the state diagnosis model based on the difference between the first distribution and the second distribution when the data shift occurs. For example, when the difference between the mean of the first distribution and the mean of the second distribution exceeds a threshold value, it may be determined that a data shift occurs, and the state diagnosis model may be adjusted based on the mean difference value. The model adjustment may include adjusting a threshold score for diagnosing defects.

According to the embodiment, the controller 132 may be configured to determine whether the data shift occurs based on a statistical hypothesis test for the first distribution and the second distribution. The statistical hypothesis test may mean a statistical inference process that determines whether a hypothesis regarding an actual value of the population is reasonable using information of a sample. For example, if it is determined that a hypothesis that the first distribution and the second distribution are identical to each other is inappropriate, it may be assumed that the data shift occurs. A certain number of samples or more may need to be secured to perform the statistical inference process. The certain number may be 50, for example, and may be changed to other values as needed.

According to the embodiment, the controller 132 may be configured to determine that a data shift occurs when a significance probability (p-value) indicating a probability that a null hypothesis that a first mean value of the first distribution and a second mean value of the second distribution are the same is established is less than or equal to a threshold value. When such a null hypothesis is rejected, it may be inferred that the first mean value of the first distribution and the second mean value of the second distribution are different from each other. A threshold value used for rejecting the null hypothesis may be 0.05 corresponding to a confidence level of 95%, 0.01 corresponding to a confidence level of 99%, etc. According to the embodiment, instead of the first mean value and the second mean value, other representative values such as a first median value of the first distribution and a second median value of the second distribution may be utilized.

According to the embodiment, the controller 132 may be configured to adjust the threshold score used to determine the welding state of the battery cell 110 as defective when the data shift occurs. The data shift may move electrical data in the welding process by a certain value as a whole, and thus, different data distributions may be measured for the same welding process. The threshold score may be adjusted to prevent the occurrence of over-detection, in which normal data is incorrectly diagnosed as defective due to a change in the data distribution. For example, when the standard deviation of state scores is σ and the mean is µ, the threshold score may be σ±3µ, where a value of the threshold score may be changed when a data shift occurs.

According to the embodiment, the controller 132 may be configured to adjust the threshold score based on a difference between a first representative score among state scores for the target battery cells and a second representative score among state scores of the training data. For example, when the mean of the first distribution is µ₁, while the mean of the second distribution changes to µ₂ in the target battery cells, the threshold score may change by µ₂-µ₁. Alternatively, for the median m, the threshold score may change by m₂-m₁. According to the embodiment, a first standard deviation σ₁ of the first distribution and a second standard deviation σ₂ of the second distribution may be compared to determine whether it is appropriate for the second distribution to be different from the first distribution in the target battery cells, and it may be determined, based on the comparison result, whether the variation in the second distribution is temporary. For example, the greater the difference between σ₁ and σ₂, the higher the probability that the variation in the second distribution is determined to be temporary.

According to the embodiment, the target battery cells may include a reference number or more of battery cells produced most recently among a plurality of battery cells mass-produced by the welding process. For example, when a welding process that showed a normal level of defect rate shows a very high defect rate after a specific point in time, it may be assumed that a factor affecting the defect determination of the welding process has recently occurred. In order to check whether a change in data distribution has occurred in cells diagnosed recently, a reference number or more of battery cells produced most recently may be selected as target battery cells. For example, the reference number of cells may be 50, and the reference number of cells may be increased or decreased for higher or lower accuracy.

According to the embodiment, the data shift may occur due to replacement of consumables of the welding device 120 performing the welding process. For example, a welding rod of the welding device 120 may be replaced periodically because the welding rod is consumed as the welding process progresses, and when an old part is replaced with a new part, a certain offset may occur in the measured value of the electrical data. In order to prevent the state diagnosis model from being newly trained each time a consumable of the welding device 120 is replaced, threshold value adjustment based on the data distribution variation may be performed.

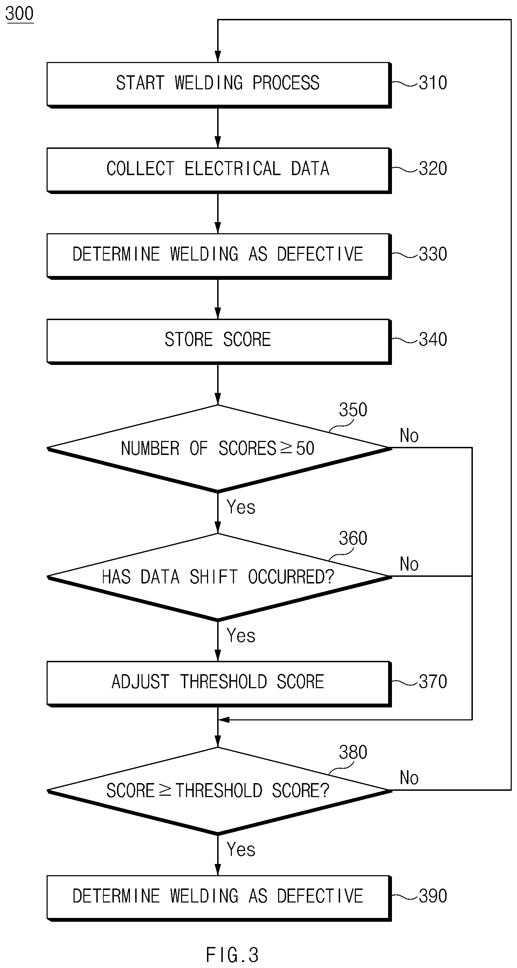

FIG. 3 illustrates a process of adjusting a threshold score of a state diagnosis model in response to a data shift according to some embodiments.

Referring to FIG. 3, a flow 300 illustrating the process of adjusting the threshold score of the state diagnosis model in response to the data shift may be illustrated. The flow 300 may include steps 310 to 380.

In step 310, a welding process may be started. In step 320, electrical data during the welding process may be collected. Electrical data may include welding voltage, welding current, welding temperature, welding resistance, etc. In step 330, whether the welding state is defective may be determined based on the electrical data. Determination of a welding defect may be performed using a state score based on an isolation forest (IF) algorithm.

In step 350, it may be determined whether the number of target battery cells for which a data shift is suspected to occur is 50 or more. When it is determined that the number of target battery cells is 50 or more, it may be determined in step 360 whether the data shift has occurred. The occurrence of data shift may be determined based on statistical characteristics of the distribution of target battery cells. When it is determined that the data shift occurs, a threshold score of the state diagnosis model may be adjusted in step 370. When it is determined in step 380 that the state score of the battery cell exceeds the adjusted threshold score, the welding of the corresponding cell may be determined to be defective in step 390.

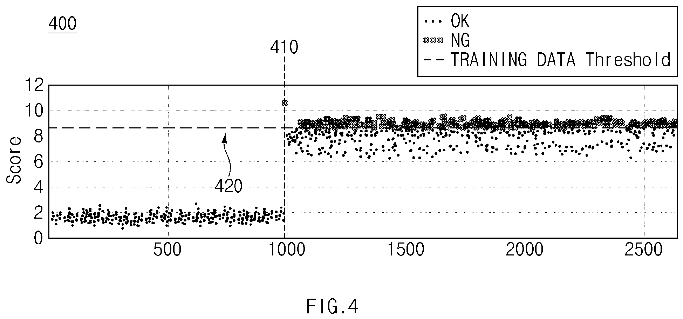

FIG. 4 illustrates state scores calculated before and after a data shift occurs according to some embodiments.

Referring to FIG. 4, a graph 400 illustrating state scores calculated before and after the data shift occurs may be illustrated. The horizontal axis and vertical axis of the graph 400 may represent the number of battery cells and the state score, respectively.

At the point in time 410 of the graph 400, consumables such as welding rods of the welding device 120 may be replaced, but a threshold score 420 of the state diagnosis model may not be changed. In this case, the state scores calculated after the point in time 410 may be offset by a certain value compared to the state scores calculated before the point in time 410, and as a result, a large number of defective cells may be unnecessarily detected.

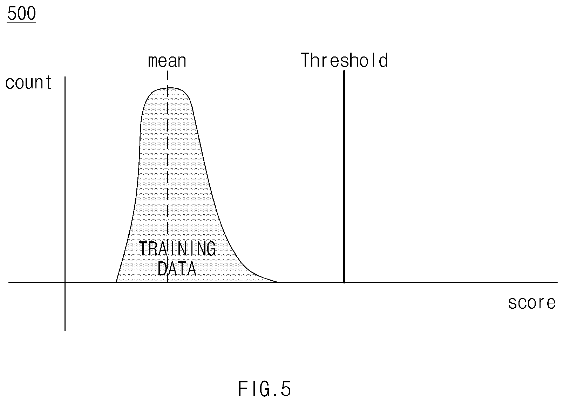

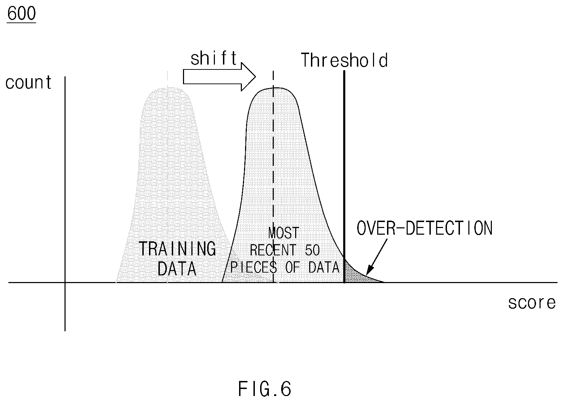

FIGS. 5 and 6 illustrate a form in which over-detection occurs in which normal data is incorrectly determined to be defective due to a data shift according to some embodiments.

Referring to FIG. 5, a graph 500 showing a first distribution before consumables of the welding device 120 are replaced may be illustrated.

In the graph 500, a first distribution of state scores of training data of a state diagnosis model may not overlap with a threshold score, and therefore, only data that deviates significantly from an average may be determined to be a welding defect.

Referring to FIG. 6, a graph 600 showing a data shift occurring due to the replacement of consumables of the welding device 120 may be illustrated.

Similar to the graph 400 of FIG. 4, the graph 600 may represent a second distribution of state scores of target battery cells composed of the most recent 50 pieces of data, and the second distribution may be moved by a certain offset compared to the first distribution due to the occurrence of data shift. In this case, if the threshold score is not changed, over-detection in which normal data is incorrectly diagnosed as defective may occur, and thus a task of adjusting the threshold score may be required.

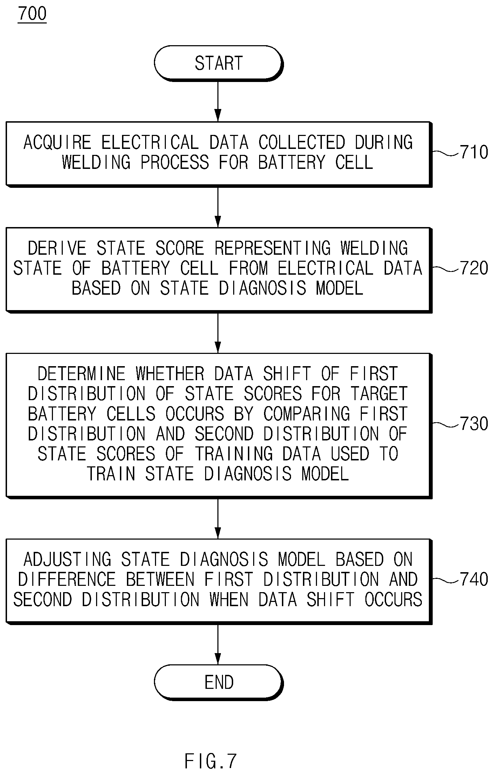

FIG. 7 illustrates steps constituting a welding management method according to some embodiments.

Referring to FIG. 7, a welding management method 700 may include steps 710 to 740. However, the present invention is not limited thereto, and some steps may be omitted therefrom or other general-purpose steps may be added thereto, and the steps of the welding management method 700 may be executed in a different order from the illustrated order.

The welding management method 700 may be composed of steps that are processed in time series by the welding management device 130. Therefore, even if the content is omitted below, the content described above for the welding management device 130 may be equally applied to the welding management method 700.

Steps 710 to 740 of the welding management method 700 may be performed by the interface 131 and the controller 132 of the welding management device 130.

In step 710, the welding management device 130 may perform a step of acquiring electrical data collected during a welding process for a battery cell.

In step 720, the welding management device 130 may perform a step of deriving a state score representing the welding state of the battery cell from the electrical data based on a state diagnosis model.

In step 730, the welding management device 130 may perform a step of determining whether a data shift of a first distribution of state scores for target battery cells occurs by comparing the first distribution and a second distribution of state scores of training data used to train the state diagnosis model.

In step 740, the welding management device 130 may perform a step of adjusting the state diagnosis model based on a difference between the first distribution and the second distribution when the data shift occurs.

According to the embodiment, the welding management method 700 may be implemented in the form of a computer program stored in a computer-readable storage medium. That is, the computer program may include instructions for implementing welding management method 700, and the instructions of the program may be stored in a computer-readable storage medium. The computer program may include a mobile application.

According to the embodiment, the computer-readable storage medium may include magnetic media such as a hard disk, a floppy disk, and a magnetic tape, optical media such as a CD-ROM, a DVD, magneto-optical media such as a floptical disk, and a hardware device specifically configured to store and execute computer program instructions such as a ROM, a RAM, a flash memory, etc. The computer program instructions may include a machine language code generated by a compiler and a high-level language code that may be executed by a computer using an interpreter, etc.

The terms "include," "configure," or "have" described above, unless specifically stated to the contrary, mean that the corresponding component may be included therein, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and those skilled in the art to which the embodiments disclosed in this document belong may make various modifications and variations without departing from the essential characteristics of the embodiments disclosed in this document. Accordingly, the embodiments disclosed in this document are not intended to limit the technical ideas of the embodiments disclosed in this document, but rather to describe them, and the scope of the technical ideas disclosed in this document is not limited by these embodiments. The scope of protection of the technical ideas disclosed in this document should be interpreted by the scope of the claims below, and all technical ideas within the equivalent scope should be interpreted as being included in the scope of the rights of this document.

### [Description of Symbols]

100: Welding management system 110: Battery cell
120: Welding device 130: Welding management device
131: Interface 132: Controller

## Claims

1. A welding management device comprising:
an interface configured to acquire electrical data collected during a welding process for a battery cell; and
a controller configured to:
derive a state score representing a welding state of the battery cell from the electrical data based on a state diagnosis model;
determine whether a data shift of a first distribution of state scores for target battery cells occurs by comparing the first distribution and a second distribution of state scores of training data used to train the state diagnosis model; and
adjust the state diagnosis model based on a difference between the first distribution and the second distribution when the data shift occurs.

2. The welding management device of claim 1, wherein the controller is configured to determine whether the data shift occurs based on a statistical hypothesis test for the first distribution and the second distribution.

3. The welding management device of claim 2, wherein the controller is configured to determine that the data shift occurs when a significance probability (p-value) representing a probability that a null hypothesis that assumes that a first mean value of the first distribution and a second mean value of the second distribution are equal to each other is established is less than or equal to a threshold value.

4. The welding management device of claim 1, wherein the controller is configured to adjust a threshold score used to determine a welding state of the battery cell as defective when the data shift occurs.

5. The welding management device of claim 4, wherein the controller is configured to adjust the threshold score based on a difference between a first representative score among the state scores for the target battery cells and a second representative score among the state scores of the training data.

6. The welding management device of claim 1, wherein the target battery cells comprise a reference number or more of battery cells produced most recently among a plurality of battery cells mass-produced by the welding process.

7. The welding management device of claim 1, wherein the data shift occurs due to replacement of consumables of a welding device that performs the welding process.

8. A welding management method comprising:
acquiring electrical data collected during a welding process for a battery cell;
deriving a state score representing a welding state of the battery cell from the electrical data based on a state diagnosis model;
determining whether a data shift of a first distribution of state scores for target battery cells occurs by comparing the first distribution and a second distribution of state scores of training data used to train the state diagnosis model; and
adjusting the state diagnosis model based on a difference between the first distribution and the second distribution when the data shift occurs.

9. The welding management method of claim 8, wherein the determining of whether the data shift occurs comprises determining whether the data shift occurs based on a statistical hypothesis test for the first distribution and the second distribution.

10. The welding management method of claim 9, wherein the determining of whether the data shift occurs comprises determining that the data shift occurs when a significance probability (p-value) representing a probability that a null hypothesis that assumes that a first mean value of the first distribution and a second mean value of the second distribution are equal to each other is established is less than or equal to a threshold value.

11. The welding management method of claim 8, wherein the adjusting of the state diagnosis model comprises adjusting a threshold score used to determine a welding state of the battery cell as defective when the data shift occurs.

12. The welding management method of claim 11, wherein the adjusting of the state diagnosis model comprises adjusting the threshold score based on a difference between a first representative score among the state scores for the target battery cells and a second representative score among the state scores of the training data.

13. The welding management method of claim 8, wherein the target battery cells comprise a reference number or more of battery cells produced most recently among a plurality of battery cells mass-produced by the welding process.

14. The welding management method of claim 8, wherein the data shift occurs due to replacement of consumables of a welding device that performs the welding process.

15. A welding management system comprising:
a welding device configured to perform a welding process on a battery cell; and
a welding management configured to acquire electrical data collected during a welding process, derive a state score representing a welding state of the battery cell from the electrical data based on a state diagnosis model, determine whether a data shift of a first distribution of state scores for target battery cells occurs by comparing the first distribution and a second distribution of state scores of training data used to train the state diagnosis model, and adjust the state diagnosis model based on a difference between the first distribution and the second distribution when the data shift occurs.
